# EUROPÄISCHE PATENTANMELDUNG

(11) **EP 0 649 826 A1**
(43) Veröffentlichungstag der Anmeldung: **26.04.1995**
(21) Anmeldenummer: 94114587.2
(22) Anmeldetag: 16.09.1994
(51) Int. Cl.: C05D 9/00, C05G 1/00, C05F 7/00

(54) **Verfahren und Vorrichtung zur Entsorgung von Klärschlamm**

(30) Priorität: 20.10.1993 DE 4335746; 20.10.1993 DE 4335745
(71) Anmelder: Hochwald-Ton-GmbH, D-66620 Nonnweiler (DE)
(72) Erfinder: Sütterlin, Hansdieter, CH-5727 Oberkulm (CH); Grässer, Jürgen, D-66125 Dudweiler (DE)
(74) Vertreter: Sparing - Röhl - Henseler Patentanwälte

(57) **Zusammenfassung**

Die Erfindung betrifft ein Verfahren und eine Vorrichtung zur Entsorgung von Klärschlamm durch Mischen eines teilentwässerten, stabilisierten Klärschlamms mit einem mineralischen Rohstoff. Um eine Aufbereitung des Klärschlamms zu einem lagerfähigen Produkt zu erreichen, das bedarfsbezogen unter Nutzung des Wertstoffpotentials im Klärschlamm und unter gleichzeitiger Reduzierung dessen Gefahrenpotentials wiederverwertbar ist, ist vorgesehen, daß der Klärschlamm und körniger, tonmineralhaltiger Rohstoff in einem Volumenverhältnis von bis zu 4 : 1 bis zum Übergang des Rohstoffgemenges in einen bildsam verformbaren Zustand miteinander gemischt und geknetet werden, das bildsame Rohstoffgemenge unter Vakuum entlüftet und zu Formkörpern gestaltet wird.

## Beschreibung

Die Erfindung betrifft ein Verfahren und eine Vorrichtung zur Entsorgung von Klärschlamm nach dem Oberbegriff des Anspruchs 1 bzw. 17.

Derartige Verfahren und Vorrichtungen zur Entsorgung von Klärschlamm sind notwendig, um die bei der Reinigung von Abwasser anfallenden großen Klärschlammengen aus kommunalen und industriellen Kläranlagen nach einer entsprechenden Stabilisierung, insbesondere durch Ausfaulen, einer sinnvollen Verwendung oder zumindest einer schadlosen Beseitigung zuführen zu können. Allein in der Bundesrepublik Deutschland fallen pro Jahr mehrere Millionen Tonnen Klärschlamm an.

Zur Verwertung der Klärschlämme bietet sich der Einsatz als Bodenverbesserungsmittel sowie als teilweiser Düngerersatz für mineralische Düngemittel an, da in der Regel eine Vielzahl organischer Substanzen sowie Makro- und Mikronährelemente in Klärschlämmen enthalten sind. Insoweit sind Klärschlämme Wertstoffe, die allerdings mit einer Reihe anorganischer und organischer Schadstoffe, pathologischer Bakterien, Viren, Wurmeiern etc. behaftet sind, so daß die auszubringende Klärschlammenge pro Hektar und Jahr im allgemeinen begrenzt ist. Es treten deshalb zunehmend Probleme im Zusammenhang mit dem Verbleib der Klärschlämme auf, insbesondere solcher Klärschlämme, die größere Schwermetallmengen enthalten.

Selbst landwirtschaftlich, forstwirtschaftlich oder gärtnerisch verwertbare Klärschlämme werden demzufolge zum überwiegenden Teil in lagerfähige Form überführt und deponiert oder verbrannt. Eine wirtschaftliche Wiederverwendung der einmal deponierten Klärschlämme ist wegen des notwendigen Zusatzes an Chemikalien, die bei einer späteren Ausbringung als Bodenverbesserungsmittel zu unerwünschten Bodenbelastungen führen würden, bisher ausgeschlossen. Nicht nur das Verbrennen, sondern auch das Deponieren der Klärschlämme führt damit zu einer Wertstoffvernichtung.

Die deponierten Klärschlämme werden außerdem häufig zu sanierungsbedürftigen Altlasten, weil bei nicht ausreichender chemischer Stabilität Schadstoffe an den Untergrund abgegeben werden. Eine Einkapselung der Altlast ist erforderlich, um die Emissionspfade zum Grundwasser zu unterbrechen.

Aufgabe der Erfindung ist es daher, ein Verfahren und eine Vorrichtung zur Entsorgung von Klärschlamm nach den Oberbegriffen der Ansprüche 1 bzw. 17 zu schaffen, die eine Aufbereitung des Klärschlamms zu einem lagerfähigen Produkt erlauben, das bedarfsbezogen unter Nutzung des Wertstoffpotentials im Klärschlamm und unter gleichzeitiger Reduzierung dessen Gefahrenpotentials wiederverwertbar ist. Eine weitere Aufgabe besteht darin, eine umweltfreundliche und kostengünstige Beseitigung der Klärschlämme zu erreichen.

Diese Aufgaben werden gemäß den kennzeichnenden Teilen der Ansprüche 1 bzw. 17 gelöst.

Hierdurch werden ein Verfahren und eine Vorrichtung zur Entsorgung von Klärschlamm geschaffen, die durch eine rein mechanische Vermengung des Klärschlamms mit einem tonhaltigen Rohstoff unter Erhalt des Klärschlamm-Wertstoffpotentials an organischen Substanzen sowie Makro- und Mikronährelementen in natürlicher Form die Herstellung eines Formkörpers ermöglichen. Diese Formkörper können als Nährelementespender dienen, wobei diese Funktion erst nach Ablauf eines Zeitabschnitts aktivierbar ist, da die Gestaltung der Formkörper aus einer bildsamen bzw. plastischen Masse eine gewisse Erosions-Widerstandsfähigkeit zur Folge hat.

Dadurch, daß in einem entlüfteten Formkörper der Klärschlamm von dem tonhaltigen Rohstoff in einem quasi anaeroben Milieu nahezu eingeschlossen wird, ist das Wertstoffpotential des Klärschlamms konserviert, und zwar in einem zunächst quasi inerten Formkörper. Durch Abnahme des Feuchtegehaltes wird dieser inerte Zustand des Formkörpers nur langsam abgebaut, was durch eine Ummantelung mit geeigneten feuchteregulierenden Medien zudem verlangsamt werden kann. Das Auswaschen der Inhaltsstoffe des Klärschlamms aus dem Formkörper ist damit zeitlich verzögerbar, wodurch der Klärschlamm wiederverwendbar lagerbar ist. Die Formkörper können auch ohne Zusatz an Chemikalien und ohne horizontale und vertikale Abdichtungen der Deponie zwischengelagert werden, da die Tonminerale des tonmineralhaltigen Rohstoffs während des erfindungsgemäßen Verfahrens mit dem Klärschlamm in einem reaktiven Kationenaustauschgleichgewicht gestanden haben. Eine Schwermetallkationenadsorption hat stattgefunden, so daß das Schadstoffpotential zurückgehalten wird. Eine spätere Emission, wenn überhaupt, ist deshalb nur gering. Adsorbiert werden ebenso die polaren organischen Schadstoffe. Feuchte als auch getrocknete Formkörper, bei denen der quasi inerte Zustand verlorengegangen ist, haben durch diese Adsorption das Gefahrenpotential verloren und können als Nährelemente beladene Austragkörper für Dünge- und Rekultivierungszwecke verwendet werden. Vorteilhaft ist insoweit die geringe Durchlässigkeit des Formkörpers für Wasser. Regen- und Bodenwasser bewirken nur eine geringe Durchströmung des Formkörpers, was das Zurückhalten der adsorbierten Schadstoffe zusätzlich unterstützt.

Als tonmineralhaltiger Rohstoff werden insbesondere solche mit zumindest einem Hauptbestand an Ton eingesetzt. Zwei- oder Dreischichttonminerale sind geeignet. Aus Kostengründen bevorzugt sind die Zweischichttonminerale, insbesondere mit den Hauptbestandteilen Kaolinit und/oder Halloysit und/oder Dickit. Durch den Einsatz von Zweischichttonmineralien mit einem zumindest niedrigen Diagenesegrad, der zu Gitterfehlstellen geführt hat, wird erfindungsgemäß erreicht, daß auch die Zweischichttonminerale ein ausreichendes Adsorptionsverhalten gegenüber Klärschlamm zeigen, damit der Klärschlamm sein Gefahrenpotential verliert.

Zur Herstellung einer bildsamen Masse aus dem Gemenge tonmineralhaltiger Rohstoff/Klärschlamm ist ein Restfeuchtegehalt des tonmineralhaltigen Rohstoffs wünschenswert, um eine gute Ausgangsreaktivität der Tonminerale zu haben. Andererseits ist der Gesamtflüssigkeitsgehalt des Gemenges in bezug auf den Festsubstanzgehalt so einzustellen, daß ein knetbarer Gemengeteig entsteht, der in eine bildsame Masse bringbar ist. Vorteilhafte Trockensubstanzgehalte sind in Anspruch 2 angegeben.

Die Körnung des tonmineralhaltigen Ausgangsrohstoffs ist wählbar, da grundsätzlich jeder tonmineralhaltige Rohstoff mit dem Hauptbestandteil Ton in eine bildsame Masse verwandelbar ist. Nur je größer das maximale Korn des Ausgangsrohstoffs ist, desto länger muß das Gemenge gemischt, geknetet und homogenisiert werden. Vorteilhafte Korngrößenbereiche sind in den Ansprüchen 4 bis 6 definiert. Bevorzugt ist dabei neben einem Feinkornbereich auch ein Grobkornbereich, damit der hergestellte Formkörper texturbedingt eine bessere Stabilität besitzt.

Die Mobilität und das Adsorptionsvermögen der Tonminerale kann dadurch verbessert werden, daß während des Knet- bzw. kombinierten Misch/Knetvorganges das Gemenge nachzerkleinert wird. Diese Bearbeitungsphase zur Erzeugung der bildsamen Masse kann von der Dauer so gewählt werden, daß während der Umwandlung in eine bildsame Masse die Adsorptionsreaktionen in einem gewünschten Umfang stattfinden können.

Ein wesentlicher Vorteil des Verfahrens liegt auch darin, daß die bildsame Masse aus dem Gemenge tonhaltiger Rohstoff/Klärschlamm in wählbar gestaltete Formkörper verarbeitbar ist. So können Blöcke für eine Lagerung in Deponien hergestellt werden, die später bei Bedarf zerkleinerbar sind, um beispielsweise einen Streudünger zu bilden.

Gleichfalls können auch unmittelbar streufähige Formkörper hergestellt werden, die, gegebenenfalls nach einer Zwischenlagerung, als Bodenverbesserungsmittel austragbar sind.

Weiterhin sind Formkörper wählbarer Abmessungen herstellbar, die in einem teilweise oder überwiegend getrockneten Zustand als Nährstoff beladener, temporär resistenter Trag- und Stützkörper neue Anwendungsgebiete erschließen. Ein solcher Trag- und Stützkörper ist nicht nur erodierbar, sondern liefert gleichzeitig für z.B. eine Anpflanzungsphase die notwendigen Dünge- und Humusstoffe, und zwar aufgrund geringer Durchströmbarkeit dosiert.

Der Vorteil eines solchen Trag- und Stützkörpers besteht darin, daß er nur zeitlich befristet erosionsresistent ist, wobei während dieser erosionsresistenten Phase der Bodenkörper in erdbaumechanischer Hinsicht seine Aufgabe voll erfüllt. Da der Formkörper aus einer bildsamen Masse hergestellt ist und unter teilweisem Wasserentzug getrocknet werden kann, widersteht er strukturell den natürlichen Witterungseinflüssen aus Wasser, Wind und Temperatur in einem ausreichenden Maße, und zwar während eines für den genannten Zweck ausreichend langen Zeitabschnitts. Altlasten, wie sie von dauerresistenten aber nur zeitlich befristet benötigten Trag- und Stützkörpern hinterlassen werden, können vermieden werden. Besonders vorteilhaft ist dabei, daß die temporäre Stütz- und Tragfähigkeit mit der Funktion eines Nährstoffspenders kombiniert ist, wodurch umweltfreundliche und wachstumsfördernde Erdbaukörper geschaffen werden.

Die Widerstandsfähigkeit kann zudem über den Aufbereitungsgrad sowie Zusätze und über die Verformungstechnik, insbesondere Luftentzug vor einer Strangbildung, beeinflußt werden. Gleiches gilt für andere technische Eigenschaften des Bodenkörpers, die durch die genannten Einflußgrößen anwendungsbezogen optimiert werden können. Beispielsweise kann die mechanische Stabilität des Formkörpers über eine Stützkornstruktur durch Verwendung eines tonmineralhaltigen Rohstoffs mit Fein- und Grobkornanteil erhöht werden.

Die erfindungsgemäße Vorrichtung gemäß der Ansprüche 17 und 18 ermöglicht das Kombinieren verschiedener Arbeitsvorgänge, so daß (Reaktions)Standzeiten vermieden werden. Eine kompakte sowie wirtschaftlich arbeitende Aufbereitungsvorrichtung ist die Folge.

Weitere Ausgestaltungen der Erfindung sind der nachfolgenden Beschreibung und den Unteransprüchen zu entnehmen.

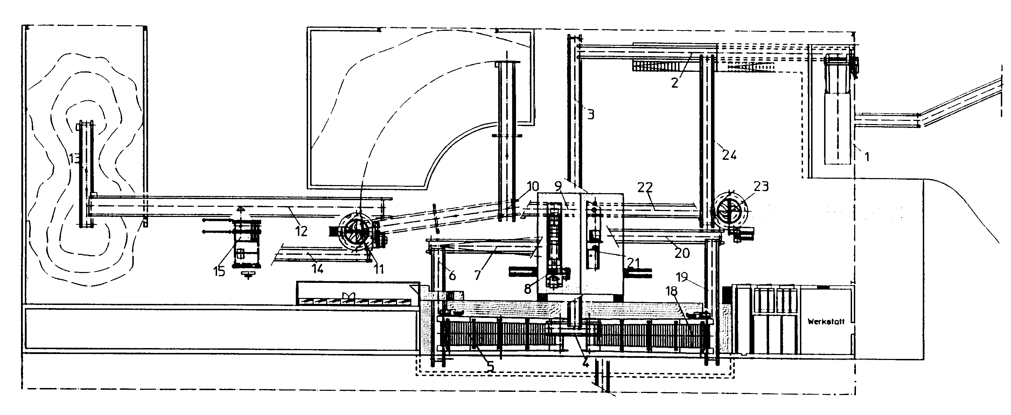

Die Erfindung wird nachstehend anhand des in der beigefügten Abbildung dargestellten Ausführungsbeispiels einer Vorrichtung zur Entsorgung von Klärschlamm näher erläutert.

Die Vorrichtung bzw. Anlage zur Entsorgung von Klärschlamm weist eingangsseitig eine Zerkleinerungsvorrichtung 1 für einen tonmimeralhaltigen Rohstoff auf. Diese Zerkleinerungsvorrichtung 1 wird benötigt, wenn der tonmineralhaltige Rohstoff in Gesteinsform vorliegt oder eine Verkleinerung des maximalen Korns erwünscht ist. Der Rohstoff in Form eines Tonsteins ermöglicht die Einstellung eines breiten Korngrößenbereiches. Die Zerkleinerungsvorrichtung 1 ist als Prallmühle ausgebildet, deren Durchsatz ebenso wie die Zerkleinerungswirkung groß ist.

Als tonmineralhaltiger Rohstoff wird ein Ausgangsrohstoff mit dem Hauptanteil Ton aus einem oder mehreren Zweischicht- oder Dreischichttonmineral/ien eingesetzt, um den Anteil unbildsamer Rohstoffe im Ausgangsrohstoff gering zu halten. Bevorzugt als tonmineralhaltiger Rohstoff ist ein Ton der Kaolingruppe, wie z.B. Kaolinit, Halloysit und Dickit, oder eine Zusammensetzung verschiedener Tone der Kaolingruppe.

Bevorzugt sind zudem Kaolinittone, die zumindest leicht plastisch sind und/oder einen zumindest niedrigen Diagenesegrad aufweisen, damit das Kationenaustauschvermögen aufgrund von Gitterfehlstellen gegenüber diagenetisch nicht verfestigten Tonen erhöht ist. Die Kaolinittone können Nebenbestandteile aufweisen, zu denen hier im allgemeinen geringe Anteile Glimmer, Illit oder Smectit sowie Anatas, Eisenminerale und Quarz zählen.

Falls in dem eingesetzten Kaolinitton nicht vorhanden, kann gegebenenfalls eine Zumischung eines geringfügigen Anteils (<4%) des Eisenminerals Siderit (FeCO₃) zum tonmineralhaltigen Rohstoff erfolgen. Eine positive Beeinflussung des Adsorptionsvermögens kann hierdurch möglich sein.

Ein beispielhaft verwendbares Tongestein setzt sich aus den Hauptbestandteilen Koalinit, Halloysit sowie Dickit zusammen und weist als Nebenbestandteile geringe Anteile an Glimmer, Dreischichttonmineral und Eisenkarbonat auf. Die Kationenaustauschkapazität gemäß DIN 19684-T8 liegt bei 14,5mval/100g. Das Wasseraufnahmevermögen liegt bei 39 %, und die Fließgrenze gemäß ATTERBERG'scher Konsistenzgrenze (DIN 18122) liegt bei w = 31,7 %.

Zur vereinfachten Benennung des vorstehend beschriebenen tonhaltigen Rohstoffs wird nachfolgend nur von Tonen bzw. Tonstein gesprochen.

Ein zur Mischung mit Klärschlamm vorgesehener Tonstein wird mittels der genannten Zerkleinerungsvorrichtung 1 auf eine wählbare Körnung zerkleinert. Eine Zerkleinerung auf feinere Korngrößenbereiche, z. B. 0,1 - 100 µm, oder mittlere Korngrößenbereiche, z.B. 0,1 µm - 1 mm, ist geeignet. Soll das aus dem tonmineralhaltigen Rohstoff herzustellende Verfahrensprodukt eine hohe Stabiltität besitzen, wie dies erfindungsgemäß gewünscht sein kann, wird ein Korngrößenbereich mit einem maximalen Korn unter 40 mm, insbesondere unter 30 mm, gewählt. Die Korngrößenverteilung kann dabei im wesentlichen kontinuierlich sein, wobei zur Förderung der später beschriebenen Bildsamkeit mindestens 20 % der wählbaren Körnung im Korngrößenbereich zwischen 0,1 und 250 µm liegen soll. Eine mögliche Korngrößenverteilung in Gew.-% (ca. Werte) ist z.B.:
20 % <2 µm
20 % 2 µm - 250 µm
20 % 250 µm - 2,5 mm
20 % 2,5 mm - 10 mm
20 % 10 mm - 30 mm.

Der vorzerkleinerte und gegebenenfalls klassierte Ton wird über Fördereinrichtungen 2, 3, 4, beispielsweise Gummibandtransporteure, einer Dosiervorrichtung 5, wie einem Kastenbeschicker, zugeführt. Diese Dosiervorrichtung 5 weist einen oder mehrere Füllkästen für den Ton sowie für Klärschlamm auf. Der Ton soll bis zu dieser Aufbereitungsstation einen Restfeuchtegehalt von 3 bis 10 %, insbesondere 5 bis 8 %, besitzen.

Der in die Dosiervorrichtung 5 einbringbare Klärschlamm ist teilentwässert mit einem Trockensubstanzgehalt von mindestens 15 %, insbesondere 20 bis 30 %. Der Klärschlamm kann aerob und/oder anaerob stabilisiert sein und ist vorzugsweise ausgefault. Mittels der Dosiervorrichtung 5 werden wählbare Gewichtsmengen an Ton und Klärschlamm zusammengebracht. Der Klärschlamm kann volumenmäßig in einem Mischungsverhältnis von bis zu 4 : 1 mit dem Ton zusammengebracht werden. Standard-Dosierungen liegen zwischen 2-3 : 1.

Die dosierten Mengen Ton und Klärschlamm gelangen von der Dosiervorrichtung 5 auf Fördereinrichtungen 6, 7, die die beim Dosiervorgang gegebenenfalls vorgemischten Mengen an Ton und Klärschlamm in eine Mischvorrichtung 8, z. B. einen Doppelmischer, bringen. Dort werden die dosierten Anteile zu einem Gemenge gemischt. Aufgrund des Wasseraufnahmevermögens des Tons wird ein lockeres, krümeliges und pelletartiges Ton-Klärschlammgemenge erhalten. Die Struktur des Ton-Klärschlammgemenges ist steuerbar, da unterschiedliche Wassergehalte im Klärschlamm durch Zugabe von mehr oder weniger großen Anteilen des Grob- und Feinanteils des Tons ausgeglichen werden können.

Dieses krümelige Ton-Klärschlammgemenge kann in einem Vorratsbereich A zwischengelagert werden, wozu teilweise schwenkbare Fördereinrichtungen 9, 10 genutzt werden können.

Die unmittelbare oder spätere Weiterverarbeitung des Ton-Klärschlammgemenges erfolgt in einer Knetvorrichtung 11. In dieser Knetvorrichtung 11 wird das Ton-Klärschlammgemenge in eine bildsame Masse verarbeitet, wobei während dieser Umwandlung auch die Kationenaustauschreaktionen an den Tonmineralien stattfinden, soweit diese während des Vormischens bzw. Mischens noch nicht eingetreten sind. Der Knetvorgang homogenisiert hierzu das Ton-Klärschlammgemenge und mobilisiert die Tonminerale, damit diese dem Klärschlamm die Flüssigkeit entziehen. Die beiden Aufbereitungsschritte - Bildsamkeit der Masse und gegebenenfalls Bindung der Schadstoffe an die Tonmineralien - können folglich beim Kneten ausgeführt werden. Die Adsorption der Schadstoffe durch diagenetisch verfestigten Kaolinitton erfolgt relativ schnell, so daß Knetzeiten von weniger als 30 Minuten realisierbar sind. Optimiert wird der Knetvorgang dadurch, daß zusammen mit dem Kneten nachzerkleinert wird. Als Knetvorrichtung 11 wird deshalb z. B. ein Siebbrechmischer eingesetzt.

Diese Nachzerkleinerung bzw. Feinverreibung wirkt auf den Klärschlamm, der in kleinste Partikel überführt wird und damit eine maximale Reaktionsoberfläche für die Adsorptionsvorgänge besitzt. Ballige Klärschlammreste, die später leicht erodierbar wären, werden vermieden.

Mittels weiterer Fördereinrichtungen 12, 13, kann die bildsame Ton-Klärschlammgemenge-Masse zu einem Vorratsbereich B gebracht werden.

Eine Weiterverarbeitung der bildsamen Masse erfolgt in einer Presse 15, die aus der bildsamen Masse Formkörper beliebiger Gestalt preßt. Dazu wird die bildsame Masse unter Vakuum entlüftet, damit im wesentlichen gasfreie Formkörper hergestellt werden. Die Presse 15 ist als Vakuumpresse ausgebildet. Der Vorgang des Entlüftens kann auch an den Knetvorgang angehängt werden. Gleiches gilt für das Pressen bzw. Extrudieren der Formkörper.

Zur Erhöhung der Durchsatzmenge der Anlage kann ein entsprechend aufgebauter zweiter Anlagen-Aufbereitungsarm mit Dosiervorrichtung 18, Mischer 21 und Knetvorrichtung 23 sowie dazwischen laufenden Fördereinrichtungen 19, 20, 22, 24 hinter der Zerkleinrungsvorrichtung 1 abzweigen.

Das anhand der Anlage beschriebene Verfahren zur Entsorgung von Klärschlamm läßt sich wie folgt zusammenfassen:

Ein tonmineralhaltiger Rohstoff wählbarer Körnung wird mit einem teilentwässerten Klärschlamm gemischt und zu einer bildsamen Ton-Klärschlammgemenge-Masse verarbeitet. Der Versatzanteil des Klärschlamms hängt einerseits von seinem Flüssigkeitsgehalt ab, der über eine Anpassung des Fein- und Grobkornanteils ausgleichbar ist, aber auch genügend Flüssigkeit für die Umformung in eine bildsame Masse bereitstellen muß, und andererseits von seiner Trockensubstanzmenge, die als unbildsamer Anteil nach Art eines Magerungsmittels die Bildsamkeit der Ton-Klärschlammgemenge-Masse nicht wesentlich stören darf.

Während der Aufbereitungsvorgänge Mischen und Kneten des Ton-Klärschlammgemenges zu einer bildsamen Masse erfolgt die Bindung der Schadstoffe an die Tonminerale. Beim Kneten wird vorzugsweise nachzerkleinert, um die Mobilisierung der Tonminerale, die Feinstzerkleinerung des Klärschlamms und die Homogenisierung des Gemenges zu verbessern. Gleichzeitig wird der Flüssigkeitsgehalt des Klärschlamms zur Erzeugung der Bildsamkeit genutzt, so daß die sonst notwendige Zugabe von Flüssigkeit, um aus einem Ton einen knetbaren Teig zu machen, entfallen kann.

Unter Vakuum wird die bildsame Masse entlüftet und zu Formkörpern gepreßt, beispielsweise durch Strangziehen in streufähige Formkörper (Granulat) oder in Formkörper wählbarer Gestalt, die als Vollkörper oder Lochkörper, gegebenenfalls mit Inhalt, in Böden ausbringbar sind. Dadurch, daß aus einer entlüfteten Masse die Formkörper gestaltet werden, entstehen im wesentlichen gasfreie Formkörper, die eine erhöhte Erosions-Widerstandsfähigkeit besitzen.

Dieses Verfahren ermöglicht den Einsatz von Zweischichttonmineralien, insbesondere Kaolinittonen, die wegen ihrer mangelnden Adsorptionskapazität für eine wirksame Bindung von Schadstoffen bisher als ungeeignet angesehen wurden. Erfindungsgemäß werden diagenetisch verfestigte Zweischichttonminerale bevorzugt. Es ist aber auch möglich, nicht diagenetisch geprägte Zweischichttonminerale als Ausgangsrohstoff zu verwenden, sofern ihre Adsorptionskapazität durch Einstellung der Plastizität vor Zugabe des Klärschlamms erhöht worden ist.

Desweiteren können dem Gemengeversatz aus Ton und Klärschlamm bekannte Zuschlagstoffe beigemengt werden, um die technischen Eigenschaften des Formkörpers zu optimieren, z.B. um die mechanische Stabiltität zu erhöhen, die Abriebfestigkeit zu verbessern etc.. Für einen biologischen Abbau des Nitrats im Klärschlamm kann dem Gemenge Melasse beigemengt werden.

Die sich als Verfahrensprodukt ergebenden Formkörper können mit einer fluidabweisenden Isolierschicht versehen und/oder gegebenenfalls infiltriert sein, um den Feuchtegehalt zu erhalten.

Die Formkörper können durch teilweisen oder vollständigen Wasserentzug getrocknet werden und als Nährstoff beladene Nutzsteine im Landschaftsbau und/oder als erodierbare Bodenkörper wählbarer Form Verwendung finden.

## Patentansprüche

1. Verfahren zur Entsorgung von Klärschlamm durch Mischen eines teilentwässerten, stabilisierten Klärschlamms mit einem mineralischen Rohstoff, dadurch gekennzeichnet, daß der Klärschlamm und ein körniger, tonmineralhaltiger Rohstoff in einem Volumenverhältnis von bis zu 4 : 1 bis zum übergang des Rohstoffgemenges in einen bildsam verformbaren Zustand miteinander gemischt und geknetet werden, das bildsame Rohstoffgemenge unter Vakuum entlüftet und zu Formkörpern gestaltet wird.

2. Verfahren nach Anspruch 1, dadurch gekennzeichnet, daß entwässerter Klärschlamm mit einem Tockensubstanzgehalt von mindestens etwa 15 %, insbesondere von 20 bis 30 %, zugesetzt wird.

3. Verfahren nach Anspruch 1 oder 2, dadurch gekennzeichnet, daß der tonmineralhaltige Rohstoff einen Restfeuchtegehalt von 3 bis 10 %, insbesondere 5 bis 8%, besitzt.

4. Verfahren nach einem der Ansprüche 1 bis 3, dadurch gekennzeichnet, daß mindestens 20 % der wählbaren Körnung im Korngrößenbereich zwischen 0,1 µm und 250 µm liegen.

5. Verfahren nach einem der Ansprüche 1 bis 4, dadurch gekennzeichnet, daß der tonmineralhaltige Rohstoff mit einer wählbaren Körnung im Korngrößenbereich zwischen 0 und 30 mm zugesetzt wird.

6. Verfahren nach einem der Ansprüche 1 bis 5, dadurch gekennzeichnet, daß der tonmineralhaltige Rohstoff mit einer im wesentlichen kontinuierlichen Korngrößenverteilung zugesetzt wird.

7. Verfahren nach einem der Ansprüche 1 bis 6, dadurch gekennzeichnet, daß der tonmineralhaltige Rohstoff als Hauptbestandteil ein oder mehrere Zweischichttonminerale, und/oder Dreischichttonminerale, enthält, wobei als Zweischichttonminerale solche Tone zugesetzt werden, deren Kationenaustauschkapazität aufgrund eines zumindest niedrigen Diagenesegrades erhöht ist.

8. Verfahren nach einem der Ansprüche 1 bis 7, dadurch gekennzeichnet, daß der tonmineralhaltige Rohstoff einen geringfügigen Gehalt an FeCO₃ aufweist.

9. Verfahren nach einem der Ansprüche 1 bis 8, dadurch gekennzeichnet, daß zur Mobilisierung der Tonminerale im tonmineralhaltigen Rohstoff und zur Homogenisierung des Gemisches aus tonhaltigem Rohstoff und Klärschlamm während des Knetvorgangs das Gemenge zusätzlich nachzerkleinert wird.

10. Verfahren nach einem der Ansprüche 1 bis 9, dadurch gekennzeichnet, daß die Misch- und/oder Knetbearbeitung des Gemenges aus tonmineralhaltigem Rohstoff und Klärschlamm während eines Zeitabschnitts erfolgt, der ausreichend ist für eine Kationenaustauschreaktion zwischen Klärschlamm und Tonmineral.

11. Verfahren nach einem der Ansprüche 1 bis 10, dadurch gekennzeichnet, daß die bildsame Masse aus dem Gemenge tonmineralhaltiger Rohstoff/Klärschlamm bis zur Einstellung eines im wesentlichen anaeroben Zustands innerhalb der Formkörper entlüftet wird.

12. Verfahren nach einem der Ansprüche 1 bis 11, dadurch gekennzeichnet, daß dem Rohstoffgemenge organische Zusätze zur Beeinflussung der Erosions-Widerstandsfähigkeit beigemengt werden.

13. Verfahren nach einem der Ansprüche 1 bis 12, dadurch gekennzeichnet, daß die Formkörper aus dem bildsamen Rohstoffgemenge in streufähiger Form oder als Voll- oder Lochkörper stranggezogen werden.

14. Verfahren nach einem der Ansprüche 1 bis 13, dadurch gekennzeichnet, daß die Formkörper zur Konservierung des Feuchtegehalts mit einer fluidabweisenden Isolierschicht ummantelt werden.

15. Verfahren nach einem der Ansprüche 1 bis 13, dadurch gekennzeichnet, daß die Formkörper durch teilweisen Wasserentzug getrocknet werden.

16. Verwendung eines nach dem Verfahren nach einem der Ansprüche 1 bis 15 erhaltenen Formkörpers als Nährelemente beladener Austragkörper für Dünge- und/oder Rekultivierungszwecke.

17. Vorrichtung zur Durchführung des Verfahrens nach einem der Ansprüche 1 bis 16, umfassend einen Zerkleinerer (1) zur eingangsseitigen Aufbereitung eines tonmineralhaltigen Rohstoffs, eine Dosiervorrichtung (5) mit Füllkästen für körnigen, tonmineralhaltigen Rohstoff und Füllkästen für teilentwässerten, stabilisierten Klärschlamm, einen Mischer zum Mischen dosierter Mengen an tonmineralhaltigem Rohstoff und Klärschlamm, eine Misch-Zerkleinerungs-Vorrichtung (11) für ein kombiniertes Kneten und Zerkleinern des vorgemischten Rohstoff-Klärschlamm-Gemenges zu einer bildsamen Masse, die gleichzeitig als Vorrichtung für Kationenaustauschreaktionen an den Tonmineralien dient, und einer Vakuumpresse zum Gestalten von Formkörpern aus dem bildsamen Gemenge.

18. Vorrichtung nach Anspruch 17, dadurch gekennzeichnet, daß als Misch-Zerkleinerungs-Vorrichtung (11) ein Siebbrechmischer vorgesehen ist.
